# EUROPEAN PATENT APPLICATION

(11) **EP 1 975 560 A1**
(43) Date of publication of application: **01.10.2008**
(21) Application number: 07707060.5
(22) Date of filing: 19.01.2007
(51) Int. Cl.: G01C 21/00, G08G 1/0969, G09B 29/00, G09B 29/10

(54) **ROUTE DISPLAY DEVICE AND NAVIGATION DEVICE**

(30) Priority: 19.01.2006 JP 2006011450
(71) Applicant: Pioneer Corporation, Tokyo 153-8654 (JP)
(72) Inventor: SHINTO, Koji, Kawagoe-shi, Saitama 3508555 (JP)
(74) Representative: Haley, Stephen
(86) International application number: PCT/JP2007/050772
(87) International publication number: WO 2007/083733

(57) **Abstract**

A route display device (100) includes a display unit (101) that displays a route. A retrieving unit (102) retrieves an alternative route that is different from the route currently being displayed, when an event occurs that makes travel difficult for a mobile object along the route being displayed. A control unit (103) controls the display unit (101) to display the retrieved alternative route. When the alternative route is displayed, an input unit (104) receives an instruction input by a user and indicating whether to switch a route to be displayed from the route being displayed to the alternative route. When the input unit (104) receives an instruction not to switch the route to be displayed from the route being displayed to the alternative route, the control unit (103) controls display of the alternative route that is to be retrieved thereafter, according to a mode of input of the instruction.

## Description

### TECHNICAL FIELD

The present invention relates to a route display device, a navigation device, a display control method, a retrieval control method, a display control program, a retrieval control program, and a recording medium that display and retrieve a route on which a mobile object travels.

### BACKGROUND ART

Conventionally, in navigation devices that provide guidance along a route to a destination, a technique (automatic rerouting) in which a detour route different from the current guided route is retrieved in the event of traffic congestion has been known. Such navigation devices display the detours retrieved, and allow a user to choose a desirable detour from among the detours displayed. Thus, guidance is provided along an appropriate detour when traffic congestion occurs (for example, see Patent Document 1 below).

Patent Document 1: Japanese Patent Laid-Open Publication No. 2001-227965

### DISCLOSURE OF INVENTION

### PROBLEM TO BE SOLVED BY THE INVENTION

However, according to the conventional technique described above, for example, a problem occurs in that even when the user wishes to cancel the detours that are retrieved and displayed upon traffic congestion, and to keep traveling on the route currently being taken, the navigation device again retrieves detours according to the traffic congestion, and displays the detours retrieved.

In this case, a problem exists in that, for example, route guidance cannot be performed according to the intention of the user and the automatic rerouting function, which is meant to enhance the convenience of navigation devices, can be rather troublesome for users.

### MEANS FOR SOLVING PROBLEM

To solve the problems above and achieve an object, a route display device, according to the invention of claim 1, has a display unit displaying a route and includes a retrieving unit that retrieves an alternative route different from the route being displayed when an event occurs that makes travel difficult, for a mobile object, along the route being displayed; a control unit that controls the display unit to display the alternative route retrieved; and an input unit that receives an instruction that is input by a user when the alternative route is displayed and indicates whether to switch the route being displayed to the alternative route, wherein the control unit, when the instruction received indicates not to switch the route being displayed to the alternative route, according to a mode of input of the instruction, controls display of an alternative route retrieved thereafter.

A navigation device according to the invention of claim 5 has a retrieving unit that retrieves a route and a guiding unit that provides guidance along the route retrieved, and includes a control unit that controls the retrieving unit to retrieve an alternative route different from the route for which guidance is being provided when an event occurs that makes travel difficult for a mobile object being guided along the route; an informing unit that informs a user of the alternative route retrieved; and an input unit that, when the user is informed of the alternative route, receives an instruction that is input by the user and that indicates whether to switch the route to the alternative route, wherein the control unit, when the instruction received indicates not to switch the route to the alternative route, according a mode of input of the instruction, controls retrieval of an alternative route performed thereafter by the retrieving unit.

A display control method according to the invention of claim 6 and for a route display device that displays a route and includes an obtaining step of obtaining information concerning an event that makes travel of a mobile object difficult; a determining step of determining, when the information concerning the event is obtained, whether the event occurs along the route being displayed; a retrieving step of retrieving an alternative route that is different from the route being displayed, when it is determined that the event occurs along the route being displayed; a displaying step of displaying the alternative route on the route display device; an input step of receiving an instruction that is input by a user when the alternative route is displayed and that indicates whether to switch the route being displayed to the alternative route; and a control step of controlling, when the instruction received indicates not to switch the route being displayed to the alternative route and according to a mode of input of the instruction, display of an alternative route retrieved thereafter.

A retrieval control method according to the invention of claim 7 and for a navigation device includes an obtaining step of obtaining information concerning an event that makes travel of a mobile object difficult; a determining step of determining, when the information concerning the event is obtained, whether the event occurs along a route for which guidance is being provided; a retrieving step of causing the navigation device to retrieve an alternative route that is different from the route for which guidance is being provided, when it is determined that the event occurs along the route for which guidance is being provided; an informing step of informing a user of the alternative route retrieved; an input step of receiving an instruction that is input by the user when the user is informed of the alternative route and that indicates whether to switch the route for which guidance is being provided to the alternative route; and a control step of controlling, when the instruction received indicates not to switch the route for which guidance is provided to the alternative route and according to a mode of input of the instruction, display of an alternative route retrieved thereafter.

A display control program according to the invention of claim 8 causes a computer execute the display control method according to claim 6.

A retrieval control program according to the invention of claim 8 causes a computer execute the retrieval control method according to claim 7.

A computer-readable recording medium according to the invention of claim 10 stores therein any one of the display control program according to claim 8 and the retrieval control program according to claim 9.

### BRIEF DESCRIPTION OF DRAWINGS

Fig. 1 is a block diagram depicting a functional configuration of a route display device according to an embodiment;
Fig. 2 is a flowchart showing a route display process performed by the route display device;
Fig. 3 is a block diagram showing a functional configuration of a navigation device according to an embodiment;
Fig. 4 is a block diagram showing a hardware configuration of the navigation device according to an example;
Fig. 5 is a flowchart of a rerouting process performed by the navigation device;
Fig. 6 is a flowchart of a rerouting process performed by the navigation device;
Fig. 7 is an explanatory diagram depicting an example of the screen display in which the alternative route and the selecting buttons are displayed at step S507 shown in Fig. 5; and
Fig. 8 is an explanatory diagram depicting an example of a screen display when the display of the alternative route is cancelled at step S510 shown in Fig. 6.

### EXPLANATIONS OF LETTERS OR NUMERALS

- 100: Route display device
- 101: Display unit
- 102: Retrieving unit
- 103: Control unit
- 104: Input unit
- 105: Informing unit
- 300: Navigation device
- 301: Retrieving unit
- 302: Guiding unit
- 303: Control unit
- 304: Informing unit
- 305: Input unit

### BEST MODE(S) FOR CARRYING OUT THE INVENTION

Exemplary embodiments of a route display device, a navigation device, a display control method, a retrieval control method, a display control program, a retrieval control program, and a recording medium according to the present invention are explained in detail below with reference to the accompanying drawings.

### (Embodiment)

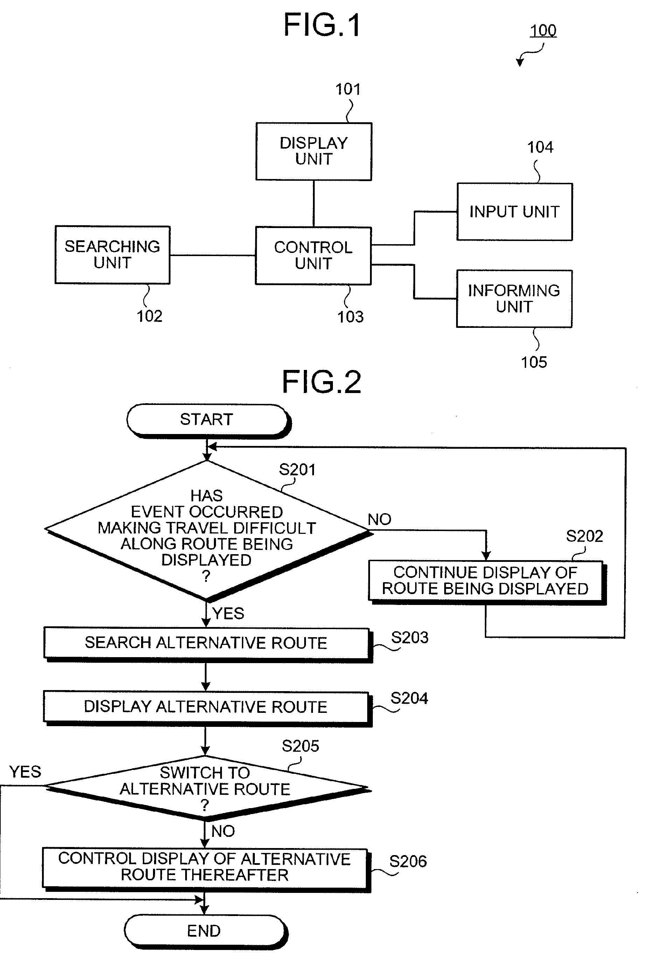

First, a functional configuration of a route display device 100 according to an embodiment is explained. Fig. 1 is a block diagram depicting a functional configuration of the route display device according to the embodiment. The route display device 100 includes a display unit 101, a retrieving unit 102, a control unit 103, an input unit 104, and an informing unit 105.

The display unit 101 displays a route on which a mobile object travels. The display unit 101 displays, on a display screen, the route on which the mobile object travels by superimposing the route on map data, for example. At this time, a current position of the mobile object can be displayed superimposed on the map data simultaneously.

The retrieving unit 102 retrieves an alternative route that is different from the route being displayed when an event occurs that makes it difficult for the mobile object to travel along the route being displayed. Such an event includes, for example, a case in which traffic congestion occurs on the route being displayed, a case in which a current position of the mobile object has deviated considerably from the route being displayed, and the like.

An alternative route is, for example, a route from a current position of the mobile object to a destination, a detour section that is a section of the route changed to avoid an event that makes travel difficult along the route being displayed, or the like.

The control unit 103 causes the display unit 101 to display the retrieved alternative route. The control unit 103 causes the display unit 101 to display the retrieved alternative route superimposed on map data, for example.

The input unit 104, when an alternative route is displayed, receives an instruction input by a user indicating whether to switch the route to be displayed from the route currently being displayed to the alternative route. The input unit 104 receives a selection made by the user, for example, by displaying a selecting screen enabling the user to choose whether to use the alternative route on the display unit 101. Alternatively, configuration may be such that instruction is input by voice.

When instruction is received indicating not to switch the route to be displayed from the route being displayed to the alternative route, the control unit 103, according to the mode of the input, controls the display of an alternative route that is retrieved thereafter. For example, when the instruction not to switch from the route being displayed to an alternative route is made by a predetermined mode, the control unit 103 performs control such that an alternative route retrieved thereafter is not displayed. The predetermined mode is, for example, a long push or a double click of a button on the selecting screen, or the like.

Moreover, at this time, when control is such that the alternative route is not to be displayed, the control unit 103 can be configured to display, on the display unit 101, an indication of such. Indication that the alternative route is not to be displayed is made by displaying a message or an icon indicating accordingly, for example.

The informing unit 105 informs a user that the alternative route is not to be displayed when control by the control unit 103 is such that an alternative route is not to be displayed. The informing unit 105 informs the user of such by, for example, audio output.

Next, a route display process performed by the route display device 100 is explained. Fig. 2 is a flowchart showing the route display process performed by the route display device. As shown in the flowchart in Fig. 2, the route display device 100 first determines, by the retrieving unit 102, whether an event has occurred that makes travel difficult along the route being displayed (step S201).

Until an event occurs that makes travel difficult along the route being displayed (step S201: NO), the route being displayed continues to be displayed (step S202), and the process returns to step S201 and the process thereafter is repeated. On the other hand, when an event occurs that makes travel difficult along the route being displayed (step S201: YES), the retrieving unit 102 retrieves an alternative route that is different from the route being displayed (step S203).

Subsequently, the control unit 103 displays the alternative route retrieved at step S203 on the display unit 101 (step S204). It is then determined whether to switch the route to be displayed from the route being displayed currently to the alternative route (step S205). Specifically, an instruction input from a user and received by the input unit 104 is determined. When the alternative route is to be switched to (step S205: YES), in other words, when an instruction to switch the route to be displayed from the route currently being displayed to the alternative route is received, the process in the flowchart is finished.

On the other hand, if the alternative route is not to be switched to (step S205: NO), in other words, when an instruction not to switch the route to be displayed from the route currently being displayed to the alternative route is received, the control unit 103 thereafter controls display of the alternative route by the display unit 101 (step S206), and the process in the flowchart is finished.

The route display device 100 is applicable to, for example, a navigation device that provides guidance along a retrieved route. While the route display device 100 described above is configured to control the display of the alternative route by the display unit 101 depending on a mode of an instruction input, a navigation device can be configured to control the retrieval of an alternative route depending on a mode of an instruction input, for example.

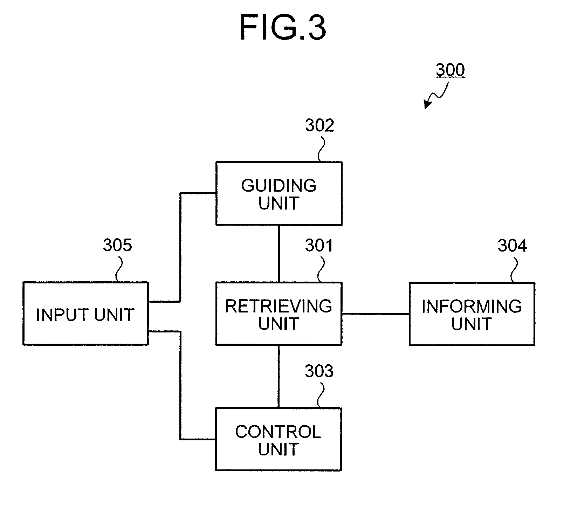

Fig. 3 is a block diagram showing a functional configuration of a navigation device according to an embodiment. A navigation device 300 includes a retrieving unit 301, a guiding unit 302, a control unit 303, an informing unit 304, and an input unit 305.

The retrieving unit 301 retrieves a route on which a mobile object travels. The guiding unit 302 provides guidance along a route that is retrieved by the retrieving unit 301. The control unit 303 causes the retrieving unit 301 to retrieve an alternative route that is different from the route for which guidance is provided when an event occurs that makes travel difficult along the route for which guidance is provided.

The informing unit 304 informs the user of the alternative route that is retrieved by the retrieving unit 301. The informing unit 304 informs the user of the alternative route, for example, by displaying the retrieved alternative route superimposed on map data on a display screen. Alternatively, the informing unit 304 can inform the user of the alternative route, for example, by outputting rough information concerning the alternative route by sound.

The input unit 305, when the user is informed of an alternative route, receives an instruction that is input by the user and indicates whether to switch the route to be guided from the current guided route to the alternative route. The input unit 305, for example, displays a selecting screen for the user to input whether the alternative route is to be displayed on the display unit. Alternatively, configuration may be such that the instruction is input by voice.

Upon the receipt of an instruction not to switch the guide route from the current guide route to the alternative route is received, the control unit 303 controls alternative route retrieval performed by the retrieving unit 301 thereafter, depending on the mode of the input. For example, when the input of instruction not to switch from the current guide route to the alternative route is made by a predetermined mode, the control unit 303 performs control such that an alternative route retrieved thereafter is not displayed. The predetermined mode is, for example, a long push or a double click of a button on the selecting screen, or the like.

As explained above, with the route display device 100 according to the embodiment, an alternative route from a current position of a mobile object to a destination is retrieved when an event occurs that makes travel difficult along a route being displayed, such as traffic congestion. Further, when the retrieved alternative route is not chosen by a user, display of an alternative route that is retrieved thereafter is controlled depending on a mode of instruction input. Particularly, when the instruction input is by a predetermined mode, control is such that an alternative route retrieved thereafter is not displayed. Moreover, in the navigation device 300, alternative route retrieval performed by the retrieving unit 301 thereafter is controlled.

Thus, it is possible to prevent the display (retrieval) of a route unnecessary to a user. In addition, it is possible to prevent the loss of attention by a user caused by the presentation of information concerning an unnecessary route. Particularly when the user is driving, the presentation of excess information is distracting and can cause a traffic accident as the user may not look ahead carefully. When the user does not instruct display of the alternative route, the route display device 100 is configured to not display an alternative route again so that unnecessary information is not presented.

Furthermore, when control is such that an alternative route is not to be displayed, the display unit 101 does not display the alternative route and/or the informing unit 105 informs the user of such implemented control accordingly. This enables the user to recognize that display of an alternative route is stopped.

### Example

### (Hardware Configuration of Navigation Device 400)

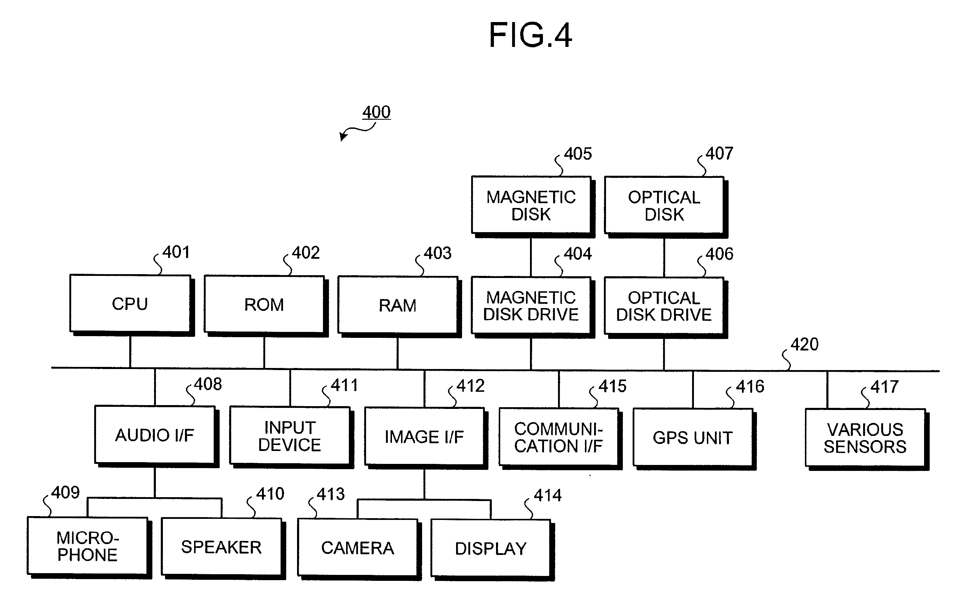

Next, an example of the route display device 100 according to the embodiment described above is explained. In this example, a case in which the route display device 100 is applied to a navigation device 400 is explained. Fig. 4 is a block diagram showing a hardware configuration of the navigation device according to the example.

As shown in Fig. 4, the navigation device 400 includes a CPU 401, a ROM 402, a RAM (memory) 403, a magnetic disk 405, an optical disk drive 406, an optical disk 407, a sound I/F (interface) 408, a microphone 409, a speaker 410, an input device 411, an image I/F 412, a camera 413, a display 414, a communication I/F 415, a GPS unit 416, and various sensors 417. Respective components 401 to 417 are connected through a bus 420.

The CPU 401 controls the entire navigation device 400. The ROM 402 stores programs, such as a boot program, a communication program, a database creating program, and a data analysis program. The RAM 403 is used as a work area of the CPU 401.

The magnetic disk drive 404 controls the reading/writing of data from/to the magnetic disk 405 in accordance with the control of the CPU 401. The magnetic disk 405 records data that is written under the control of the magnetic disk drive 404. As the magnetic disk 405, for example, an HD (hard disk) or an FD (flexible disk) can be used.

The optical disk drive 406 controls the reading/writing of data from/to the optical disk 407 in under the control of the CPU 401. The optical disk 407 is a detachable recording medium from which data is read under the control of the optical disk drive 406. As the optical disk 407, a writable recording medium can be used. Other than the optical disk 407, an MO, a memory card, or the like can be used as the detachable recording medium.

Another example of data stored in the magnetic disk 405 and the optical disk 407 is map data that is used for route retrieval, route guidance, and the like. The map data includes background data indicative of features, such as buildings, rivers, and ground surfaces, and road configuration data indicative of road configurations, and is drawn two-dimensionally or three-dimensionally on a display screen of the display 414. During route guidance by the navigation device 400, the map data and a current position of a vehicle that is obtained by the CPU 401 are displayed in a superimposed state.

The background data further includes background configuration data that expresses a configuration of backgrounds and background type data that expresses a type of backgrounds. The background configuration data includes, for example, data for a representative point of a feature, a polyline, a polygon, coordinates of the feature, and the like. The background type data includes, for example, text data expressing a name, address, and telephone number of a building and the like, and type data of a feature, such as building, river, ground surface, and the like.

Further, for major facilities (POI: Point of Interest) on a map, information concerning business hours, parking availability, and the like are included as facility information. Moreover, among features, facilities for certain purposes such as "gas station" and "convenience store" are categorized according to types thereof. The data of a representative point and coordinates and, the facility information/category information concerning a feature are associated with each other. Categories into which facilities are categorized further include, for example, parking, station, and the like, in addition to the gas station and the convenience store described above.

The road configuration data further includes traffic condition data. The traffic condition data includes information concerning the presence or absence of a signal or a crosswalk, presence or absence of entrance and exit of an expressway or a junction, length (distance) of each link, road width, direction of travel, road type (expressway, toll road, local road, etc.), and the like.

In the traffic condition data, past congestion data is recorded in which data on past traffic congestions are statistically processed based on season, day of the week, long holiday season, time of day, and the like. The navigation device 400, which obtains information concerning current traffic congestion from road traffic information that is received by the communication I/F 415 described later, can estimate the congestion at a specific time based on the past congestion data.

The audio I/F 408 is connected to the microphone 409 for sound input and the speaker 410 for sound output. Sound received by the microphone 409 is A/D converted in the audio I/F 408. From the speaker 410, sound is output. The sound input through the microphone 409 can be recorded on the magnetic disk 405 or the optical disk 407 as audio data.

The input device 411 includes a remote control, a keyboard, a mouse, a touch panel, and the like that have keys to input characters, numerals, various instructions, and the like. Furthermore, the input device 411 can be connected to other information processing terminals such as a digital camera and a mobile telephone, and can input and output data.

The image I/F 412 is connected to the camera 413 for image input and the display 414 for the image output. Specifically, the image I/F 412 is configured, for example, with a graphic controller that controls the entire display 414, a buffer memory such as VRAM (video RAM) that temporarily stores image data that can be displayed immediately, and a control IC that controls the display 414 based on the image data output by the graphic controller.

The camera 413 captures images inside and outside a vehicle, and outputs the images as image data. The image captured by the camera 413 can be recorded in the magnetic disk 405 or the optical disk 407 as the image data. On the display 414, an icon, a cursor, a menu, and a window, or various kinds of data including a character, an image, and the like are displayed. For this display 414, for example, a CRT, a TFT liquid crystal display, a plasma display, or the like can be employed.

The communication I/F 415 is connected to a network through wireless communication and functions as an interface between the navigation device 400 and the CPU 401. The communication I/F 415 is further connected to a communication network such as the Internet through wireless communication, and also functions as a interface between this communication network and the CPU 401.

The communication network includes a LAN, a WAN, a public line network, a mobile telephone network, and the like. Specifically, the communication I/F 415 is configured, for example, with an FM tuner, a VICS (vehicle information and communication system)/beacon receiver and other communication devices, and obtains road traffic information, such as information concerning traffic congestion and a traffic control and delivered from the VICS center. VICS is a registered trademark.

The GPS unit 416 receives radio waves from GPS satellites and calculates data indicating a current position of a vehicle (current position of the navigation device 400). Data output from the GPS unit 416 is used, together with values output from the various sensors 417 described later, at the calculation of a current position of the vehicle performed by the CPU 401. The data indicating the current position includes, for example, a latitude, a longitude, an altitude, and the like, that specify a point on the map data.

The various sensors 417, such as a vehicle speed sensor, a gyro sensor, an angular speed sensor, and the like, output information from which a position and behavior of a vehicle can be determined. Values output from the various sensors 417 are used by the CPU 401 for calculation of a current position and measurement of an amount of change in speed and direction. In the navigation device 400, the values output from the various sensors 417 can be data that is recorded by a drive recorder function.

Among the components of the route display device 100 according to the embodiment, functions of the display unit 101 are implemented by the display 414, the retrieving unit 102 and the control unit 103 by the CPU 401, the input unit 104 by the input device 411, the informing unit 105 by the CPU 401, the audio I/F 408, the speaker 410, the image I/F 412, and the display 414.

### (Rerouting by Navigation Device 400)

Next, a rerouting process performed by the navigation device 400 is explained. The navigation device 400 retrieves a route to a destination point that is set by a user and performs a navigation process (route guidance) along the retrieved route. On the other hand, when circumstances change during the navigation process because of factors unpredictable at the time of route retrieval, the navigation device 400 retrieves a route to the destination point again (rerouting), and allows the user to choose an optimal route.

A main reason for performing the rerouting is a change in traffic conditions. At route retrieval, actual road conditions that are obtained from VICS (registered trademark) information, a statistical value of a past traffic included in the map data, and the like are taken into consideration. Therefore, when traffic conditions change, for example, when traffic congestion occurs on a route after the route has been retrieved, rerouting is performed to acquire an optimal route while reflecting the change of the traffic condition.

In addition to this case, rerouting is performed also when a vehicle on which the navigation device 400 is mounted deviates from the guide route, or the like, to guide the vehicle back to the guide route , or to re-retrieve a route from the current position of the vehicle to the destination point.

However, even when rerouting is performed, a route (hereinafter, alternative route) that is retrieved as a result of the rerouting is not necessarily chosen by the user. For example, when the user prefers to drive a familiar route even if the arrival time to the destination point as a result is delayed due to traffic congestion, it is possible that the user may wish to keep driving on the route currently traveled, not choosing the alternative route.

As above, even when a user is driving on a route that is chosen by himself/herself, when a circumstance (for example, traffic congestion on the route) for which rerouting has been performed is still not resolved, rerouting is performed again for the same reason and an alternative route is to be displayed. Such a process is complicated for a user, and the navigation device 400 also performs unnecessary processing.

Therefore, when a user cancels an alternative route in a predetermined mode, the navigation device 400 does not display an alternative route after the cancellation (hereinafter, cancel lock). The predetermined mode is a mode that can be distinguished from an ordinary cancellation mode, and for example, such as when a button to be pressed at cancellation is pressed by a long push or when a button, which is specially provided for the purpose of instructing the cancel lock, is pressed, and the like. This enables the rerouting process without complication for the user, and further, processing of the navigation device 400 can be reduced.

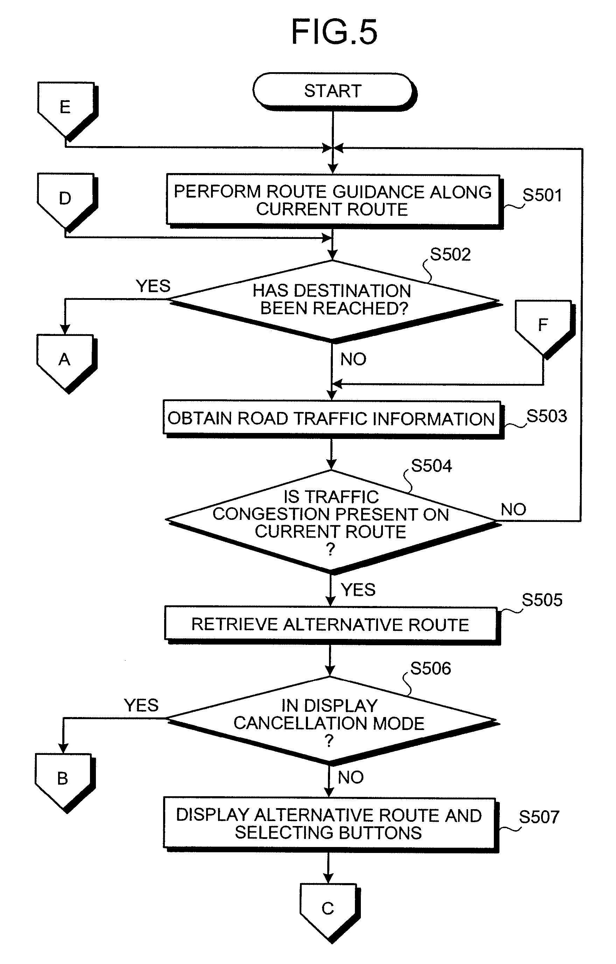

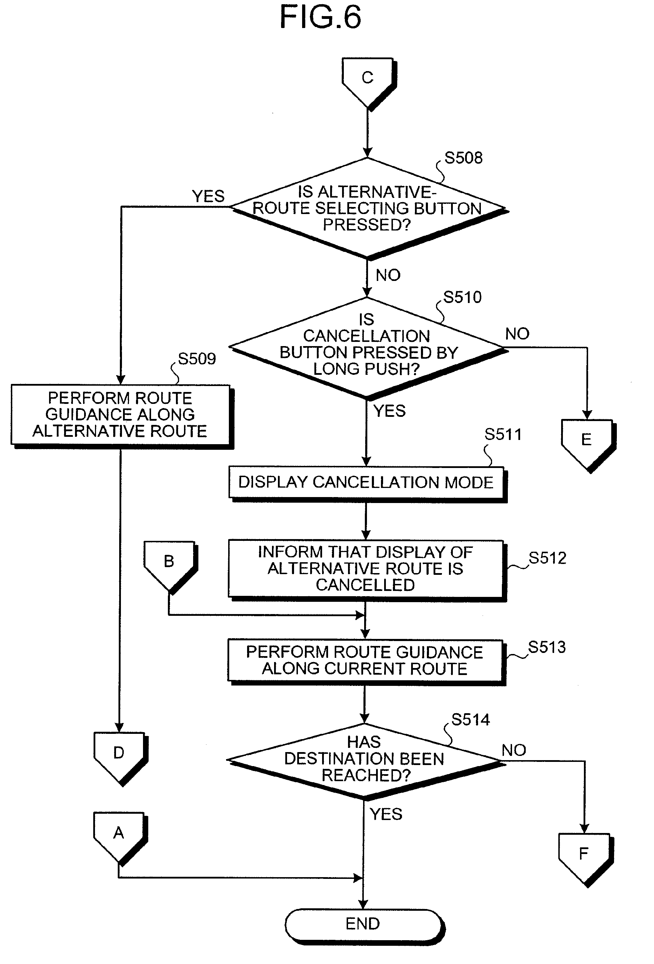

Fig. 5 and Fig. 6 are flowcharts of the rerouting process performed by the navigation device. In the explanation below, the trigger for retrieval (rerouting) of an alternative route is traffic congestion existing on a route currently being traveled.

In the flowchart shown in Fig. 5, the navigation device 400 is performing route guidance along a route currently being traveled (hereinafter, current route) (step S501). It is then determined whether a current position of the vehicle (navigation device 400) has reached a destination point that is set by the user (step S502).

When the destination point has been reached (step S502: YES), the process in this flowchart is ended. Determination whether the destination point has been reached is made based on whether a current position of the vehicle as calculated by the CPU 401 coincides with the destination point.

On the other hand, when the destination point has not been reached (step S502: NO), road traffic information is obtained by the communication I/F 415 or the like (step S503), and it is determined whether traffic congestion exists on the current route (step S504). Determination whether traffic congestion exists can be made based on the actual traffic information obtained by the communication I/F 415 or the like, or by estimating traffic congestion from the past congestion data that is included in the map data recorded on the magnetic disk 405 or the optical disk 407, for example.

When no congestion exists on the current route (step S504: NO), the process returns to step S501, and the process thereafter is continued to be performed. On the other hand, when congestion exists on the current route (step S504: YES), an alternative route to avoid the congestion and to reach the destination point more efficiently is retrieved (step S505). At this time, the alternative route to be retrieved can be one or more. The navigation device 400 then determines whether a display mode for the alternative route is a display cancellation mode (step S506).

The display cancellation mode is a mode that is executed when the cancellation button described later is pressed by a long push, to control the display output of the retrieved alternative route to the display 414. When the display mode is in the display cancellation mode, a cancellation release button to release the display cancellation mode is displayed on the display 414. The user can release the display cancellation mode by pressing the cancellation release button. When the display mode is in the display cancellation mode (step S506: YES), the process proceeds to step S513 in Fig. 6. On the other hand, when the display mode is not in the display cancellation mode (step S506: NO), the retrieved alternative route and selecting buttons are displayed on the display 414 as usual (step S507), and the process proceeds to step S508 in Fig. 6.

The selecting buttons are buttons enabling the user to choose whether to switch the route to be displayed as a guide route to the alternative route or to keep the current route, and include, for example, an alternative-route selecting button and a cancellation button. When the alternative-route selecting button is pressed, the guide route is switched to the alternative route and the alternative route is displayed on the display 414. On the other hand, when the cancellation button is pressed, the current route is maintained as the guide route and the current route continues to be displayed on the display 414. The user checks the alternative route displayed on the display 414, determines which one of the current route and the alternative route to choose, and presses either of the selecting buttons.

Proceeding to explanation of Fig. 6, the navigation device 400 determines whether the alternative-route selecting button is pressed among the selecting buttons displayed at step S507 shown in Fig. 5 (step S508). When the alternative-route selecting button is pressed step S508: YES), route guidance is performed for the alternative route (step S509). The process then returns to step S502 shown in Fig. 5, and the process thereafter is repeated. On the other hand, when the alternative-route selecting button is not pressed (step S508: NO), it is determined whether the cancellation button is pressed by a long push (step S510). The long push is a state in which one button is continuously pressed for more than a predetermined time, e.g., for more than 3 seconds.

When the cancellation button is pressed by a long push (step S510: YES), the display of the alternative route is set to a display cancellation mode (step S511), and the user is informed that the display of the alternative route is cancelled (step S512). To inform the user that the display of the alternative route is cancelled, for example, a message indicating that the display of the alternative route is cancelled is displayed on the display 414.

On the other hand, when the cancellation button is not pressed by a long push (step S510: NO), the process returns to step S501 shown in Fig. 5, and the process thereafter is repeated. The case in which the cancellation button is not pressed by a long push includes a case in which a period of time during which the cancellation button continues to be pressed is less than the predetermined time (ordinary cancellation of the alternative route), a case in which none of the selecting buttons is pressed, and the like.

When the user is informed that the display of the alternative route is cancelled at step S512, the navigation device 400 continues to perform the route guidance along the current route (step S513). It is then determined whether the destination point has been reached (step S514). When the destination point has been reached (step S514: YES), the process in this flowchart is ended. On the other hand, when the destination point has not been reached (step S514: NO), the process returns to step S503, and the process thereafter is repeated.

By the processing described above, the navigation device 400 performs guidance to a destination point while repeating retrieval (rerouting) of an alternative route. The trigger for retrieval of an alternative route is not limited to traffic congestion and can be, for example, deviation of the vehicle from the current route, or a traffic control that inhibits travel on the road.

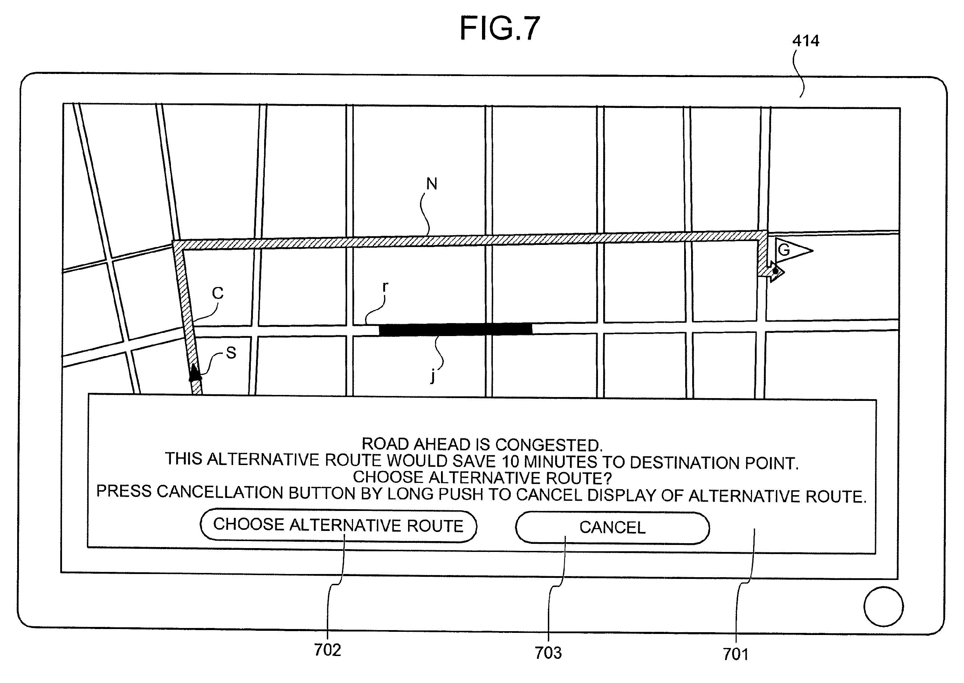

Fig. 7 is an explanatory diagram depicting an example of the screen display in which the alternative route and the selecting buttons are displayed at step S507 shown in Fig. 5. On the display 414 of the navigation device 400, a position indicator S that indicates the current position of the vehicle on which the navigation device 400 is mounted and a flag G that indicates the destination point for this travel are displayed. The current route is a route making a right turn at an intersection C.

On the other hand, a congestion indicator j that indicates a congested section is displayed on a road r that is to be traveled on after the right turn is made at the intersection C. An alternative route N indicated by a hatched arrow is an alternative route that is retrieved as a result of retrieval of an alternative route because the navigation device 400 has obtained information of the congested section j.

On the display 414, a message display 701, "Road ahead is congested. This alternative route would save 10 minutes to destination point. Choose this alternative route?" is displayed. The user determines whether to choose the alternative route taking contents of the message display 701, a route of the displayed alternative route N, a condition of the congested section, and the like into consideration. When the user presses an alternative-route selecting button 702, the guide route is switched to the alternative route N, and the navigation device 400 performs route guidance along the alternative route.

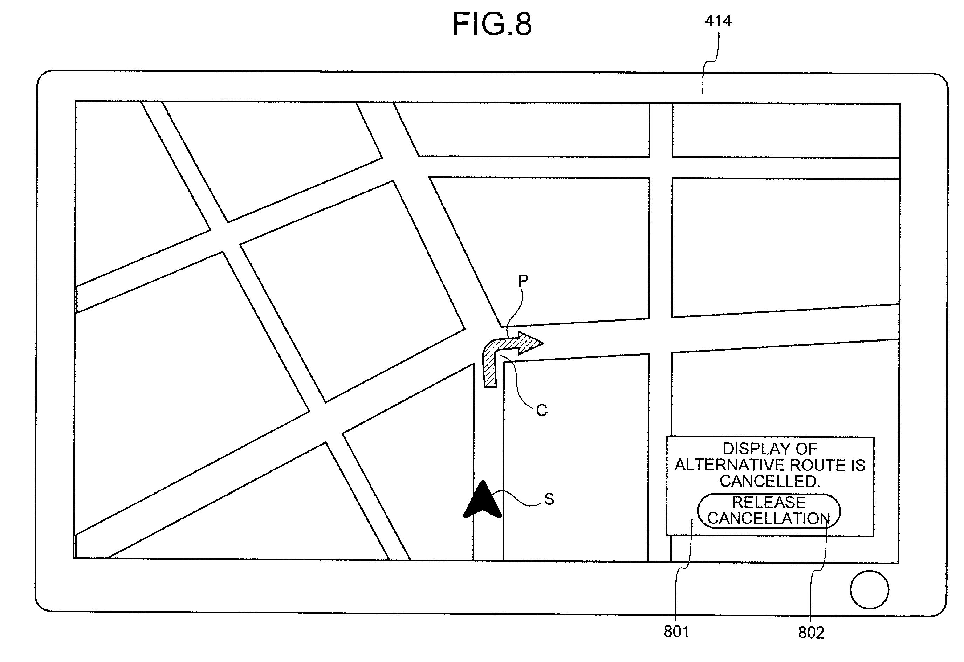

On the other hand, when the user presses a cancellation button 703, the display of the alternative route is cancelled, and the display returns to a route guidance screen depicted in Fig. 8 described later. In other words, the guide route is not switched to the alternative route N, and the navigation device 400 continues the route guidance along the current route.

Furthermore, in the message display 701, a message indicating "Press cancellation button by long push to cancel display of alternative route" is also displayed. When the user presses the cancellation button 703 by a long push, the navigation device 400 cancels the display of the alternative route and continues the route guidance along the current route.

Fig. 8 is an explanatory diagram depicting an example of a screen display when the display of the alternative route is cancelled at step S510 shown in Fig. 6. On the display 414 of the navigation device 400, the current position indicator S indicating the current position of a vehicle on which the navigation device 400 is mounted and a map around the route currently being traveled are displayed. Moreover, an arrow P that indicates a guide route on the route currently being traveled is displayed ahead in the traveling direction of the vehicle. In other words, in the example depicted in Fig. 8, the vehicle is guided to make a right turn at the intersection C.

Meanwhile, at the right bottom of the display 414, a message display 801, "Display of alternative route is cancelled" is displayed. Other than the message display 801, a guide sound, sound effect, or the like can be output from the speaker 410 (not shown). A visual effect can be added that the message display 801 such as flashing of the message.

The message display 801 enables the user to be informed that the retrieval of an alternative route is cancelled. When an alternative route is wished to be displayed, an instruction to release the cancellation of the display of an alternative route is made by pressing a cancellation release button 802. On the other hand, when an alternative route is wished not to be displayed, driving is continued without any particular operation.

As described above, according to the navigation device 400, when an event that makes it difficult for the vehicle to travel along a route being displayed occurs, for example, when traffic congestion occurs, an alternative route from the current position of the vehicle to the destination is retrieved. Further, when the user does not choose the retrieved alternative route, the display of an alternative route to be retrieved thereafter is controlled depending on the mode of input of the instruction of this choice. Specifically, when the cancellation button is pressed by a long push, it is switched to the cancellation mode to cancel the display of an alternative route.

Thus, information unnecessary to the user is not displayed on the display 414, and it is possible to prevent loss of attention by the user. Particularly when the user is driving, the presentation of excess information on the display 414 draws the attention of the user away from the road and can cause a traffic accident as a result. The navigation device 400 is configured to cancel the display of an alternative route when a user does not require the alternative route so that unnecessary information is not displayed on the display 414.

Moreover, the display of the message display 801 indicating that the display of an alternative route is cancelled on the display 414 enables the user to confirm a display status of an alternative route. Furthermore, the display of the cancellation release button 802 together with the message display 801 enables the user to release the cancellation of the display at will.

The display control method and the retrieval control method explained in the present embodiment can be implemented using a computer, such as personal computer and a work station, to execute a program that is prepared in advance. This program is recorded on a computer-readable recording medium such as a hard disk, a flexible disk, a CD-ROM, an MO, and a DVD, and is executed by a computer reading it from the recording medium. Moreover, this program can be a transmission medium that can be distributed through a network such as the Internet.

## Claims

1. A route display device that includes a display unit displaying a route, the route display device comprising:
a retrieving unit that retrieves an alternative route different from the route being displayed when an event occurs that makes travel difficult, for a mobile object, along the route being displayed;
a control unit that controls the display unit to display the alternative route retrieved; and
an input unit that receives an instruction that is input by a user when the alternative route is displayed and indicates whether to switch the route being displayed to the alternative route, wherein
the control unit, when the instruction received indicates not to switch the route being displayed to the alternative route, according to a mode of input of the instruction, controls display of an alternative route retrieved thereafter.

2. The route display device according to claim 1, wherein the control unit, when the mode of input of the instruction indicating not to switch the route being displayed to the alternative route is a predetermined mode, performs control such that an alternative route retrieved thereafter is not displayed.

3. The route display device according to claim 2, wherein the control unit, when control is such that the alternative route is not to be displayed, controls the display unit to display indication of such control.

4. The route display device according to claim 2 or 3, further comprising an informing unit that, when the control by the control unit is such that the alternative route is not to be displayed, informs the user that the alternative route is not to be displayed.

5. A navigation device that includes a retrieving unit that retrieves a route and a guiding unit that provides guidance along the route retrieved, the navigation device comprising:
a control unit that controls the retrieving unit to retrieve an alternative route different from the route for which guidance is being provided when an event occurs that makes travel difficult for a mobile object being guided along the route;
an informing unit that informs a user of the alternative route retrieved; and
an input unit that, when the user is informed of the alternative route, receives an instruction that is input by the user and that indicates whether to switch the route to the alternative route, wherein
the control unit, when the instruction received indicates not to switch the route to the alternative route, according a mode of input of the instruction, controls retrieval of an alternative route performed thereafter by the retrieving unit.

6. A display control method of a route display device that displays a route, the display control method comprising:
an obtaining step of obtaining information concerning an event that makes travel of a mobile object difficult;
a determining step of determining, when the information concerning the event is obtained, whether the event occurs along the route being displayed;
a retrieving step of retrieving an alternative route that is different from the route being displayed, when it is determined that the event occurs along the route being displayed;
a displaying step of displaying the alternative route on the route display device;
an input step of receiving an instruction that is input by a user when the alternative route is displayed and that indicates whether to switch the route being displayed to the alternative route; and
a control step of controlling, when the instruction received indicates not to switch the route being displayed to the alternative route and according to a mode of input of the instruction, display of an alternative route retrieved thereafter.

7. A retrieval control method of a navigation device comprising:
an obtaining step of obtaining information concerning an event that makes travel of a mobile object difficult;
a determining step of determining, when the information concerning the event is obtained, whether the event occurs along a route for which guidance is being provided;
a retrieving step of causing the navigation device to retrieve an alternative route that is different from the route for which guidance is being provided, when it is determined that the event occurs along the route for which guidance is being provided;
an informing step of informing a user of the alternative route retrieved;
an input step of receiving an instruction that is input by the user when the user is informed of the alternative route and that indicates whether to switch the route for which guidance is being provided to the alternative route; and
a control step of controlling, when the instruction received indicates not to switch the route for which guidance is provided to the alternative route and according to a mode of input of the instruction, display of an alternative route retrieved thereafter.

8. A display control program causing a computer execute the display control method according to claim 6.

9. A retrieval control program causing a computer execute the retrieval control method according to claim 7.

10. A computer-readable recording medium storing any one of the display control program according to claim 8 and the retrieval control program according to claim 9.
